# EUROPEAN PATENT SPECIFICATION

(11) **EP 1 921 848 B1**
(45) Date of publication and mention of the grant of the patent: **04.09.2013**
(21) Application number: 07113240.1
(22) Date of filing: 26.07.2007
(51) Int. Cl.: H04N 5/50, H04N 5/445

(54) **Apparatus and method for receiving a broadcast**
Vorrichtung und Verfahren zum Empfangen von Rundfunkinhalt
Appareil et procédé de réception de diffusion

(30) Priority: 09.11.2006 KR 20060110709
(43) Date of publication of application: 14.05.2008
(73) Proprietor: Samsung Electronics Co., Ltd., Suwon-si, Gyeonggi-do, 443-742 (KR)
(72) Inventor: CHOI, Yeon-jung, Suwon-si, Gyeonggi-do (KR); MO, Dong-il, Suwon-si, Gyeonggi-do (KR)
(74) Representative: Hewett, Jonathan Michael Richard

(56) References cited:
- EP-A2- 0 631 435
- EP-A2- 0 772 354
- JP-A- 2001 160 956
- US-A1- 2006 053 458

## Description

Apparatuses and methods consistent with the present invention relate to receiving a broadcast. More particularly, the present invention relates to receiving a broadcast in which a broadcast channel list for various regions is generated and displayed.

Generally, a broadcast receiving apparatus receives a broadcast signal emitted from a nearby broadcast station through an antenna, processes the signal, and then outputs video and audio data.

A broadcast receiving apparatus installed in a region, for example, in Europe on or near the territorial border between countries such as Germany, France, and Belgium, receives a broadcast signal emitted from broadcast stations of Germany, France, and Belgium through an antenna, processes the signal, and then outputs audio and/or video (A/V) data.

In this case, since the broadcast receiving apparatus receives broadcast signals from all three countries, all the channel lists of the broadcast signals of three countries are displayed without regard to the preferences or country of a user when displaying the broadcast channel list. Therefore, the user is inconvenienced because the user also views unnecessary channel lists of broadcast signals of neighboring counties when changing channels.

Additionally, the broadcast receiving apparatus receives the broadcast signals of all three countries and processes the signals, and thus an overload may occur due to the excessive signal processing. As a result, a user may be further inconvenienced.

In the above description, only three countries were exemplified, but broadcast receiving apparatuses used in a region which borders three or more countries receive all of the signals emitted from broadcast stations of the three or more countries. Accordingly, the above-described problems may become more serious.

EP 0 631 435 A2 discloses an apparatus for performing reservation-recording on a video cassette recorder (VCR) using a G-code.

JP 2001-160956 A discloses a television receiver capable of setting the language of the teletext depending on the region in which the broadcasting station is based.

The present invention aims to provide a broadcast receiving apparatus and a method thereof, which generates and displays a broadcast channel list for each region so that a user can easily understand information on channels for each region and process broadcast signals separately.

According to an aspect of the present invention, there is provided a broadcast receiving apparatus according to claim 1, and a broadcast receiving method according to claim 11.

According to an aspect of the present invention, there is provided a broadcast receiving apparatus comprising a receiver which receives broadcast signals from a plurality of regions, a channel list generator which generates a broadcast channel list for each region using information contained in each of the broadcast signals, and an output unit which outputs the broadcast channel list for each region.

The channel list generator may detect country information using a country information table contained in each of the broadcast signals, and generate the broadcast channel list for each region according to the detected country information.

The country information table may be a network information table.

The channel list generator may detect region information using a region information table contained in each of the broadcast signals, and generate the broadcast channel list for each region according to the detected region information.

The channel list generator may comprise a demultiplexer which demultiplexes each of the broadcast signals and detects the network information table, a detector which detects information on the country to which the broadcast signals belong, using a network identification (ID) of the detected network information table, and a generating unit which classifies each of the broadcast signals received by the receiver according to the country using the detected country information and generates the channel list.

The apparatus may further comprise an input unit which receives a selection signal. The channel list generator may change the configuration of the broadcast channel list for each region in response to the selection signal input through the input unit, to generate the channel list.

The channel list generator may generate a channel list including each broadcast signal corresponding to a selected region, if a specific region is selected through the input unit.

The channel list generator may generate a channel list of all the broadcast signals received by the receiver, if a selection signal for displaying all channels is input through the input unit.

The apparatus may further comprise a storage unit which stores broadcast signal channel information for each region. The channel list generator may read the broadcast signal channel information stored in the storage unit and generates the broadcast channel list for each region.

The apparatus may further comprise a decoder which separately decodes each of the broadcast signals using the broadcast channel list for each region.

The apparatus may further comprise a tuner which tunes to a selected channel, if a single channel is selected from the broadcast channel list for each region through the input unit.

According to another aspect of the prevent invention, there is provided a broadcast receiving method of a broadcast receiving apparatus, the method comprising receiving broadcast signals from a plurality of regions; generating a broadcast channel list for each region using information contained in each of the broadcast signals; and outputting the broadcast channel list for each region.

The generating may comprise detecting country information using a country information table contained in each of the broadcast signals, and generating the broadcast channel list for each region according to the detected country information.

The country information table may be a network information table.

The generating may comprise detecting region information using a region information table contained in each of the broadcast signals, and generating the broadcast channel list for each region according to the detected region information.

The generating may comprise demultiplexing each of the broadcast signals and detecting the network information table; detecting information on the country to which each of the broadcast signals belongs, using a network ID of the detected network information table; and classifying each of the received broadcast signals according to the country of origin using the detected country information to generate the broadcast channel list for each region.

The method may further comprise receiving a selection signal. The generating may comprise changing the configuration of the broadcast channel list for each region in response to the input selection signal, to generate the channel list.

The generating may comprise generating a channel list including each broadcast signal corresponding to a selected region, if a specific region is selected in response to the selection signal.

The generating may comprise generating a channel list of all the received broadcast signals, if a selection signal for displaying all channels is input.

The method may further comprise detecting information on a region corresponding to each of the broadcast signals using the information contained in each of the broadcast signals, and storing the detected region information and the broadcast signal channel information. The generating may comprise reading the previously stored information to generate the broadcast channel list for each region.

The method may further comprise separately decoding each of the broadcast signals using the broadcast channel list for each region.

The method may further comprise tuning to a selected channel, if a single channel is selected from the broadcast channel list for each region.

Embodiments of the present invention will now be described by way of example, with reference to the accompanying drawings, in which:
Figure 1 is a block diagram of a broadcast receiving apparatus according to an exemplary embodiment of the present invention;
Figure 2 is a block diagram of a broadcast receiving apparatus according to another exemplary embodiment of the present invention;
Figure 3 is a block diagram of a broadcast receiving apparatus according to still another exemplary embodiment of the present invention;
Figure 4 is a mimetic diagram illustrating a user interface window for inputting a selection signal according to an exemplary embodiment of the present invention;
Figure 5 is a mimetic diagram illustrating a channel list display window according to an exemplary embodiment of the present invention;
Figure 6 is a flowchart illustrating a broadcast receiving method of the broadcast receiving apparatus according to an exemplary embodiment of the present invention;
Figure 7 is a flowchart illustrating a broadcast receiving method of the broadcast receiving apparatus according to another exemplary embodiment of the present invention; and
Figure 8 is a flowchart illustrating a broadcast receiving method of the broadcast receiving apparatus according to still another exemplary embodiment of the present invention.

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present invention. Thus, it is apparent that the present invention can be carried out without those specifically defined matters. Also, well-known functions or constructions are not described in detail since they would obscure the invention with unnecessary detail.

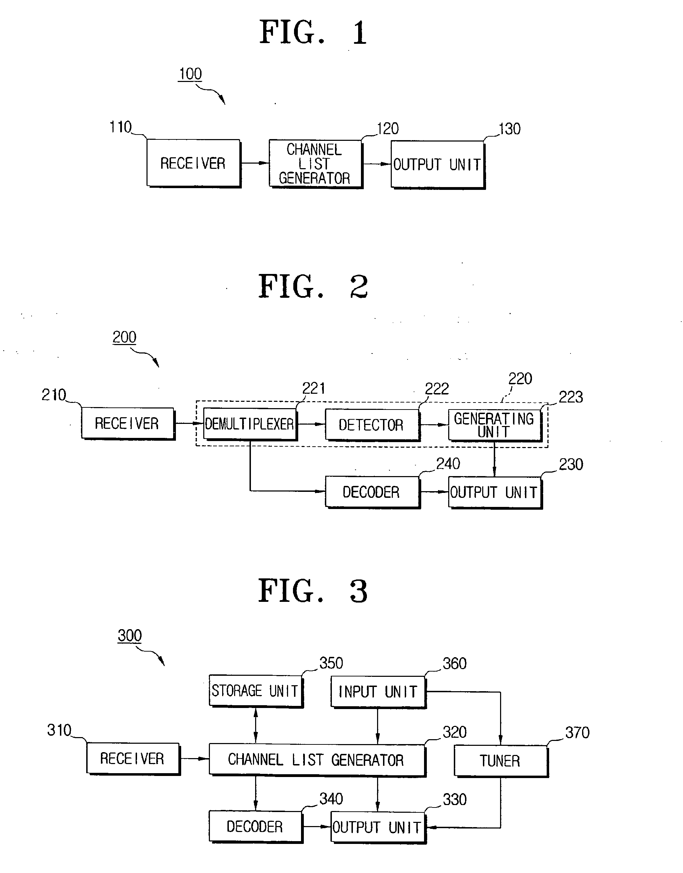

Figure 1 is a block diagram of a broadcast receiving apparatus according to an exemplary embodiment of the present invention. In Figure 1, a broadcast receiving apparatus 100 comprises a receiver 110, a channel list generator 120, and an output unit 130.

The receiver 110 receives a broadcast signal; that is, the receiver 110 receives all the broadcast signals of a region in which the broadcast receiving apparatus 100 is installed. If the region in which the broadcast receiving apparatus 100 is installed borders on one or more countries, the receiver 110 can also receive broadcast signals of neighboring countries.

The channel list generator 120 generates a broadcast channel list for each region using information contained in the broadcast signal which is received by the receiver 110. Here, a "broadcast channel list for each region" refers to a broadcast channel list generated by classifying broadcast channels according to each region. A "region" used here may be cover both countries and territorial units within countries. Specifically, the channel list generator 120 detects information regarding the country corresponding to the broadcast signal using a network information table included in the broadcast signal, and generates a broadcast channel list for each region according to the detected information.

The output unit 130 displays on a screen the broadcast channel list for each region, which is generated by the channel list generator 120. Accordingly, a user can identify information on the broadcast channels for each region.

Figure 2 is a block diagram of a broadcast receiving apparatus according to another exemplary embodiment of the present invention. In Figure 2, a broadcast receiving apparatus 200 comprises a receiver 210, a channel list generator 220, an output unit 230, and a decoder 240.

The receiver 210 receives all broadcast signals of a region in which the broadcast receiving apparatus 200 is installed.

The channel list generator 220 generates a broadcast channel list for each region, using information contained in the broadcast signal received by the receiver 210. The channel list generator 220 comprises a demultiplexer 221, a detector 222, and a generating unit 223.

The demultiplexer 221 demultiplexes the broadcast signal received by the receiver 210, and separates and detects a video signal, an audio signal and a data signal. The data signal may comprise a network information table. Additionally, the demultiplexer 221 transmits the separated/detected video and audio signals to the decoder 240, and sends the network information table to the detector 222.

The detector 222 may detect information on the country to which the broadcast signal belongs using a network identification (ID) of the network information table detected by the demultiplexer 221. In this case, the network ID comprises information on the country from which the broadcast signal is transmitted. The information contained in the network ID is set to a predetermined number, and accordingly the broadcast signal transmitted from one country includes information on the same country. In this way, the detector 222 may detect the country information.

The generating unit 223 classifies the broadcast signal received by the receiver 210 according to the country of origin using the country information detected by the detector 222, to generate a broadcast channel list for each region. The broadcast channel list need not be classified by the country of origin, and may be generated based on all the countries corresponding to the broadcast signals being received.

The decoder 240 decodes the video and audio signals transmitted from the demultiplexer 221.

The output unit 230 outputs the video and audio signals decoded by the decoder 240 as video and/or audio. Additionally, the output unit 230 displays the broadcast channel list generated by the generating unit 223 on a screen.

Figure 3 is a block diagram of a broadcast receiving apparatus according to still another exemplary embodiment of the present invention. As can be seen, a broadcast receiving apparatus 300 comprises a receiver 310, a channel list generator 320, an output unit 330, a decoder 340, a storage unit 350, an input unit 360, and a tuner 370.

The receiver 310, channel list generator 320, output unit 330 and decoder 340, as shown in Figure 3, may operate in the same manner as the corresponding elements of Figures 1 and 2, and accordingly their detailed descriptions have been omitted for the sake of brevity in the following description of Figure 3.

The receiver 310 receives all broadcast signals of a region in which the broadcast receiving apparatus 300 is installed.

The storage unit 350 stores broadcast channel information for each region. In this case, the broadcast channel information relates to the channel number, broadcast station name, and program title, and is stored for each region.

The input unit 360 receives a selection signal. Specifically, the input unit 360 may receive a single region selection signal for displaying channels of a single region, or a multi-region selection signal for displaying all channels of all regions. At this time, if a user desires to generate a channel list for a single region, the user may select the single region and input the single region selection signal. Additionally, if a user desires to generate a channel list for all regions, the user may input the multi-region selection signal for displaying all the channels. Furthermore, the input unit 360 receives a channel list output signal. The channel list output signal serves to display the broadcast channel list on a screen.

The input unit 360 receives a channel list selection signal. The channel list selection signal is used to select at least one channel from the channel list displayed on the screen. The input unit 360 may receive the selection signal according to a signal input through key buttons mounted on the main body, a remote controller, a touch screen, or the like, as would be understood by one of skill in the art.

The channel list generator 320 changes the configuration of the broadcast channel list for each region in response to the selection signal input through the input unit 360 to generate a channel list. Specifically, if the single region selection signal is input through the input unit 360, the channel list generator 320 reads from the storage unit 350 the broadcast signal channel information corresponding to the selected specific region and generates a broadcast channel list for the single region. For example, if "Germany" is input as a selection signal, the channel list generator 320 reads the broadcast signal channel information corresponding to "Germany" from the storage unit 350 and generates a broadcast channel list with only broadcast signals corresponding to "Germany". Therefore, the channel list generator 320 generates a broadcast channel list for each region, comprising the channel list of the specific region selected by a user.

If the multi-region selection signal is input through the input unit 360, the channel list generator 320 reads from the storage unit 350 the broadcast signal channel information corresponding to all regions and generates a channel list. For example, if the broadcast signal received by the receiver 310 is transmitted from three countries, such as "Germany", "France", and "Belgium", if the multi-region selection signal is input through the input unit 360, the channel list generator 320 reads from the storage unit 350 the broadcast signal channel information corresponding to three countries to generate a channel list of the broadcast signal corresponding to "Germany", "France", and "Belgium". Accordingly, the channel list generator 320 generates a broadcast channel list for each region, together forming the channel list for all regions. In this case, the channel list generator 320 may comprise a channel list for each country.

The decoder 340 selects broadcast signals in response to the selection signal input through the input unit 360, and decodes the selected signals. Specifically, if the single region selection signal is input through the input unit 360, the decoder 340 decodes only the broadcast signals being received for the specific region. Accordingly, it is possible to reduce a load on the system occurring due to excessive signal processing.

The tuner 370 tunes to the selected channel according to the channel selection signal input through the input unit 360. Specifically, in the situation where the broadcast channel list for each region is displayed on a screen of the broadcast receiving apparatus 300, if the selection signal corresponding to a single channel is input through the input unit 360, the tuner 370 tunes to the selected channel.

The output unit 330 outputs the broadcast signal of the channel tuned by the tuner 370 as video and/or audio. Additionally, if the channel list output signal is input through the input unit 360, the output unit 330 displays the channel list on the screen.

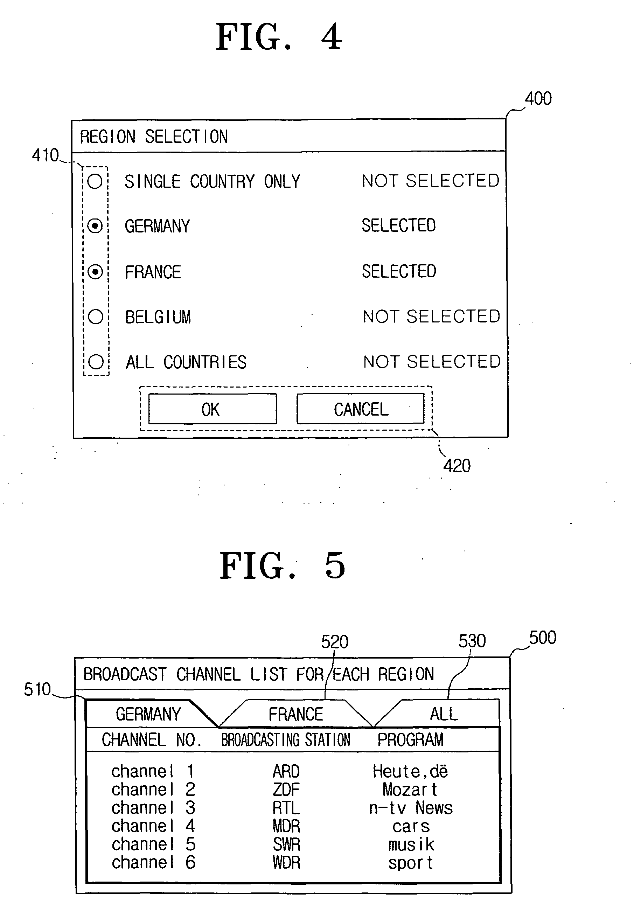

Figure 4 is a mimetic diagram illustrating a user interface window for inputting a selection signal according to an exemplary embodiment of the present invention. As shown in Figure 4, a user interface window 400 displays the names of countries corresponding to broadcast signals which are received by the broadcast receiving apparatuses, and comprises a selection field which enables a user to select each country or all the countries. For example, if the broadcast receiving apparatuses 100 to 300 are currently installed in Germany, on the border with France and Belgium, the broadcast receiving apparatuses 100 to 300 may receive the broadcast signals emitted from the broadcast stations of three countries, that is, Germany, France and Belgium. In this situation, the user interface window 400 comprises the selection field, so that the user can select only a single country, two or three countries, or all the countries. Here, "Single country" refers to the specific country in which the broadcast receiving apparatuses 100 to 300 are currently installed, which may be Germany in this exemplary embodiment.

One or more countries may be selected through the user interface window 400, and all countries displayed on the user interface window 400 may be selected. If a user selects "Single country only" through the user interface window 400, the selection fields corresponding to "Germany", "France", "Belgium" and "All countries" are inactive. If a user selects "All countries", the selection fields corresponding to "Single country only", "Germany", "France", and "Belgium" are inactive. In this way, if a user selects the specific country through the user interface window 400 in order to generate a channel list of the specific country, and then selects "OK" in the setting field 420 displayed at the bottom of the user interface window 400, the single region selection signal is input. One specific country or all countries are selected according to the desire of the user, so that the channel list can be generated according to the user selection.

Figure 5 is a mimetic diagram illustrating a channel list display window according to an exemplary embodiment of the present invention. In Figure 5, a channel list display window 500 displays a broadcast channel list for each region, corresponding to the time of day, that is, the time at which the channel list display window 500 appears. The broadcast channel list for each region, displayed on the channel list display window 500, may be the channel list of the specific region selected through the user interface window 400 of Figure 4. For example, if "Germany" and "France" are selected through the user interface window 400 of Figure 4, and Germany and France are input as a selection signal, a channel list 510 of Germany and a channel list 520 of France may be displayed on the channel list display window 500. Additionally, a channel list 530 of "All countries" including both Germany and France may be displayed.

The channel list of each region comprises information relating to the channel number, broadcast station name, and program title. Accordingly, a user may more easily recognize through the channel list display window 500 the program currently being broadcast, channel number and broadcast station on which the program is broadcast. For example, the user can know through the channel list display window 500 that the broadcast station corresponding to channel "4" of the channel list 510 is "MDR" and the program currently being broadcast is "Cars". If the user wants to check the channel list for France, the channel list 520 may be actuated by selecting "France" and may be displayed on the channel list display window 500.

If the user wants to check the channel list for all countries without sorting the channel list according to the country, the channel list 530 may be actuated by selecting "All countries" and may be displayed on the channel list display window 500. In this way, it is possible to check the channel list of the country required by the user through the channel list display window 500. Additionally, the channel list for each country can be shown, thus enhancing user convenience.

The broadcast channel list generated for each country is shown in Figures 4 and 5, but the broadcast channel list may be generated and displayed for different regions within the same country. Therefore, the user can also check a channel list of broadcast signals received in different regions.

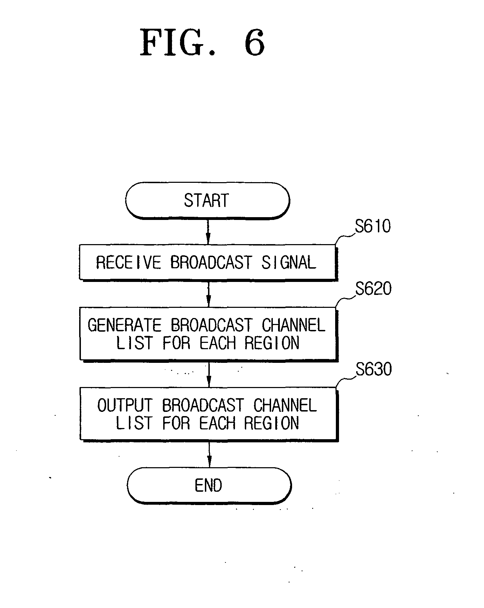

Figure 6 is a flowchart illustrating a broadcast receiving method of the broadcast receiving apparatus according to an exemplary embodiment of the present invention. In Figure 6, the broadcast receiving apparatus 100 receives a broadcast signal (S610). If a region in which the broadcast receiving apparatus 100 is installed lies on or near a border with one or more countries, the broadcast receiving apparatus 100 may receive also broadcast signals of the bordering countries.

Subsequently, the broadcast receiving apparatus 100 generates a broadcast channel list for each region of the broadcast signal being received (S620). Specifically, the broadcast receiving apparatus 100 detects a network information table contained in the broadcast signal being received and generates a channel list of the broadcast signal.

Next, the broadcast receiving apparatus 100 displays the generated broadcast channel list for each region on a screen (S630). Accordingly, a user can check the channel list for each country.

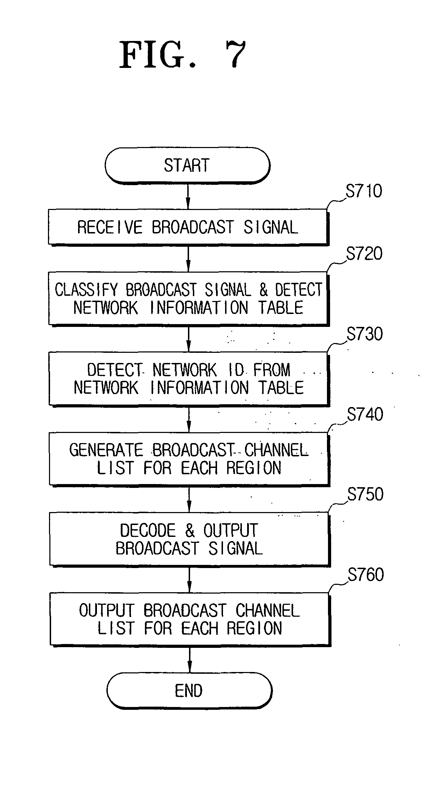

Figure 7 is a flowchart illustrating a broadcast receiving method of the broadcast receiving apparatus according to another exemplary embodiment of the present invention. In Figure 7, the broadcast receiving apparatus 200 receives a broadcast signal (S710).

Subsequently, the broadcast receiving apparatus 200 sorts the received broadcast signal, and detects the network information table (S720). Specifically, the broadcast receiving apparatus 200 demultiplexes the received broadcast signal, and detects a video signal, an audio signal, and a data signal. The broadcast receiving apparatus 200 then separates the network information table contained in the data signal to detect the network information table.

Next, the broadcast receiving apparatus 200 detects information on the country to which the broadcast signal belongs, using a network ID of the network information table (S730). The network ID may comprise information on the country transmitting the corresponding broadcast signal. The country information contained in the network ID is set to a predetermined number, and accordingly all the broadcast signals transmitted from the same country contain the same country information. Additionally, if the region borders a country or countries with several regions where different networks are used within the same country, the network ID may further comprise information on the regions in addition to the information on the country. In this way, the broadcast receiving apparatus 200 may detect the information on the country and the region to which the broadcast signal belongs.

The country information or region information is detected using the network information table and network ID in accordance with the exemplary embodiment of the present invention, but this description is only an exemplary embodiment. Therefore, other tables and IDs including the country information and region information may be used.

The broadcast receiving apparatus 200 classifies the broadcast signals according to each country, using the detected country information, and generates a broadcast channel list for each region (S740). The broadcast channel list for each region may be generated for each country or region.

Thereafter, the broadcast receiving apparatus 200 decodes the video and audio signals, which are detected in operation S720, and outputs the signals as video and/or audio (S750).

The broadcast receiving apparatus 200 displays the broadcast channel list for each region, which is generated in operation S740, on the screen (S760). Accordingly, a user can identify the broadcast channel list being displayed for each country.

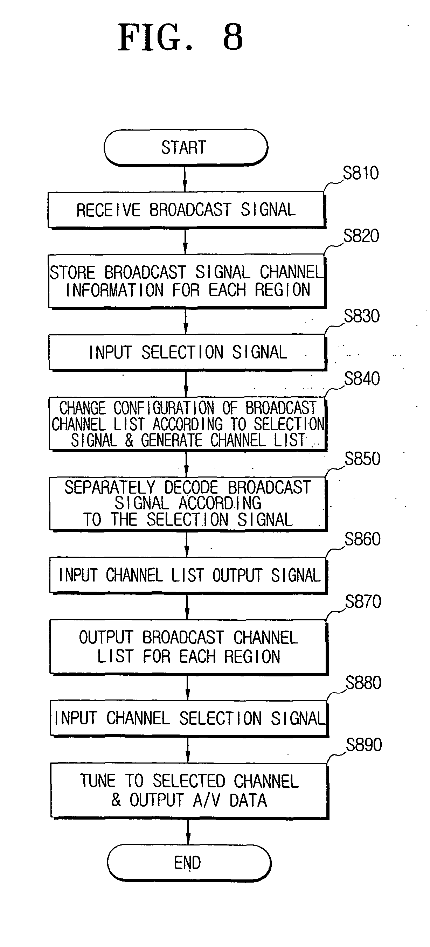

Figure 8 is a flowchart illustrating a broadcast receiving method of the broadcast receiving apparatus according to still another exemplary embodiment of the present invention. As can be seen, the broadcast receiving apparatus 300 receives a broadcast signal (S810).

Next, the broadcast receiving apparatus 300 stores the broadcast signal channel information for each region in the storage unit 350, using the broadcast signal being received (S820). The broadcast signal channel information relates to the channel number, broadcast station name, and program title, and is stored according to the region.

Subsequently, the broadcast receiving apparatus 300 receives the selection signal (S830). Specifically, the broadcast receiving apparatus 300 may receive the single region selection signal, and receive the multi-region selection signal for displaying all channels. If a user desires to generate a channel list of a specific region, the user can input the single region selection signal by selecting the specific region. Additionally, if the user desires to generate a channel list of all the regions, the user can input the multi-region selection signal by selecting all regions.

The broadcast receiving apparatus 300 changes the configuration of the broadcast channel list for each region according to the input selection signal, and generates a channel list (S840). Specifically, if the single region selection signal is input, the broadcast receiving apparatus 300 reads from the storage unit 350 the broadcast signal channel information corresponding to the selected specific region to generate a channel list of the specific region. If the multi-region selection signal is input, the broadcast receiving apparatus 300 reads from the storage unit 350 the broadcast signal channel information corresponding to all regions to generate a channel list. Accordingly, the broadcast receiving apparatus 300 generates a broadcast channel list comprising the channel lists of all the regions. Therefore, the user can identify the channel list of all the regions or any specific region selected.

The broadcast receiving apparatus 300 selects the broadcast signal in response to the selection signal input in operation S830, and decodes the selected signal (S850). More specifically, if the single region selection signal is input in operation S830, only the broadcast signal received from the specific region is decoded. Accordingly, a load can be prevented from occurring due to excessive signal processing.

Next, if the channel list output signal is input (S860), the broadcast receiving apparatus 300 displays on a screen the broadcast channel list generated in operation S840 (S870). Therefore, the user can check the broadcast channel list of the selected country or region, and identify the broadcast channel list for each country or region.

If the channel selection signal is input (S880), the broadcast receiving apparatus 300 tunes to the selected channel, and outputs the broadcast signal as video and/or audio (S890). Specifically, if a user selects a channel for viewing from the broadcast channel list for each region, displayed on the screen through an input means, such as a remote controller, the broadcast receiving apparatus 300 tunes the broadcast signal of the selected channel and outputs the signal. Therefore, the user can select the channel more conveniently by viewing the broadcast channel list for each region, so that it is possible to watch the broadcast corresponding to the selected channel.

According to the exemplary embodiments of the present invention as described above, the broadcast receiving apparatus generates and displays the broadcast channel list for each region of the country selected by the user, and thus, it is possible to view only the broadcast channel list for each region of the corresponding country. As a result, user convenience can be improved.

Additionally, only the broadcast signal of the country selected by the user is processed so as to reduce load occurrence caused by excessive signal processing.

Furthermore, the channel selected by the user is tuned on the broadcast channel list for each region, increasing user convenience when viewing the broadcast.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A broadcast receiving apparatus (100, 200, 300) comprising:
a receiver (110, 210, 310) arranged to receive broadcast signals of a plurality of regions;
a channel list generator (120, 220, 320) for generating a broadcast channel list for each of the plurality of regions using information contained in the broadcast signals;
an input unit (360) for receiving a selection signal for selecting regions from the plurality of regions
and
an output unit (130, 230, 330) arranged to output the broadcast signals or the broadcast channel list,
wherein the channel list generator (120, 220, 320) is arranged to generate:
first channel lists each respectively corresponding to broadcast signals from each of the selected regions; and
a second channel list corresponding to all broadcast signals
and means (520) for selecting
between the first channel lists and the second channel list.

2. The apparatus as claimed in claim 1, wherein the channel list generator is arranged to detect country information using a country information table contained in each of the broadcast signals, and to generate the broadcast channel list for each of the plurality of regions according to the detected country information.

3. The apparatus as claimed in claim 2, wherein the country information table is a network information table.

4. The apparatus as claimed in claim 1, wherein the channel list generator is arranged to detect region information using a region information table contained in each of the broadcast signals, and to generate the broadcast channel list for each of the plurality of regions according to the detected region information.

5. The apparatus as claimed in claim 3, wherein the channel list generator comprises:
a demultiplexer (221) arranged to demultiplex each of the broadcast signals and to detect the network information table;
a detector (222) arranged to detect information on a country to which each of the broadcast signals belong, using a network identification (ID) of the detected network information table; and
a generating unit (223) for classifying each of the broadcast signals received by the receiver, according to a country to which each of the broadcast signals belong, using the detected country information, and for generating the channel list.

6. The apparatus as claimed in any preceding claim, further comprising a storage unit for storing broadcast signal channel information for each of the plurality of regions,
wherein the channel list generator is arranged to read the broadcast signal channel information stored in the storage unit and to generate the broadcast channel list using the read information.

7. The apparatus as claimed in any one of the preceding claims, further comprising a tuner (370) arranged to tune to a selected channel, if a single channel is selected from the generated channel list through the input unit.

8. A broadcast receiving method of a broadcast receiving apparatus, the method comprising:
receiving broadcast signals of a plurality of regions;
generating a broadcast channel list for each of the plurality of regions using information contained in each of the broadcast signal;
receiving a selection signal for selecting regions from the plurality of regions
outputting the broadcast signals or the broadcast channel list,.
wherein first channel lists each respectively corresponding to broadcast signals from each of the selected regions is generated;
and
a second channel list corresponding to all broadcast signals is generated,
and wherein means (520) for
between the first channel lists and the second channel list is generated

9. The method as claimed in claim 8, further comprising detecting country information using a country information table contained in each of the broadcast signals, and wherein the broadcast channel list for each of the plurality of regions is generated according to the detected country information.

10. The method as claimed in claim 9, wherein the country information table is a network information table.

11. The method as claimed in claim 8, further comprising detecting region information using a region information table contained in each of the broadcast signals, and wherein the broadcast channel list is generated for each of the plurality of regions according to the detected region information.

12. The method as claimed in claim 10, wherein the generating step comprises:
demultiplexing each of the broadcast signals and detecting the network information table;
detecting information on a country to which each of the broadcast signals belongs, using a network identification (ID) of the detected network information table; and
classifying each of the received broadcast signals according to the country to which the broadcast signals belong using the detected country information to generate the broadcast channel list for each of the plurality of regions.

13. The method as claimed in any of claims 8 to 12, further comprising:
detecting information on a region corresponding to each of the broadcast signals using the information contained in each of the broadcast signals, and
storing the detected region information and the broadcast signal channel information,
wherein the generating comprises reading the previously stored information to generate the broadcast channel list.

14. The method as claimed in any of claims 8 to 13, further comprising tuning to a selected channel, if a single channel is selected from the generated broadcast channel list.

## Patentansprüche

1. Rundfunk-Empfangsgerät (100, 200, 300), umfassend:
einen Empfänger (110, 210, 310), angeordnet zum Empfangen von Rundfunksignalen einer Vielzahl von Regionen;
einen Kanallistenerzeuger (120, 220, 320) zum Erzeugen einer Rundfunkkanalliste für jede der Vielzahl von Regionen unter Verwendung von Informationen, die in den Rundfunksignalen enthalten sind;
eine Eingabeeinheit (360) zum Empfangen eines Auswahlsignals zum Auswählen von Regionen aus der Vielzahl von Regionen,
und
eine Ausgabeeinheit (130, 230, 330), angeordnet zum Ausgeben der Rundfunksignale oder der Rundfunkkanalliste,
wobei der Kanallistenerzeuger (120, 220, 320) angeordnet ist, um Folgendes zu erzeugen:
erster Kanallisten, jede jeweils korrespondierend mit Rundfunksignalen aus jeder der ausgewählten Regionen; und
einer zweiten Kanalliste, die mit allen Rundfunksignalen korrespondiert;
und Mitteln (520) zum Auswählen zwischen den ersten Kanallisten und der zweiten Kanalliste.

2. Gerät nach Anspruch 1, wobei der Kanallistenerzeuger angeordnet ist, um Landesinformationen unter Verwendung einer Landesinformationentabelle, die in jedem der Rundfunksignale enthalten ist, zu detektieren und um die Rundfunkkanalliste für jede der Vielzahl von Regionen gemäß den detektierten Landesinformationen zu erzeugen.

3. Gerät nach Anspruch 2, wobei die Landesinformationentabelle eine Netzwerkinformationentabelle ist.

4. Gerät nach Anspruch 1, wobei der Kanallistenerzeuger angeordnet ist, um Regionsinformationen unter Verwendung einer Regionsinformationentabelle, die in jedem der Rundfunksignale enthalten ist, zu detektieren und um die Rundfunkkanalliste für jede der Vielzahl von Regionen gemäß den detektierten Regionsinformationen zu erzeugen.

5. Gerät nach Anspruch 3, wobei der Kanallistenerzeuger umfasst:
einen Demultiplexer (221), angeordnet zum Demultiplexen jedes der Rundfunksignale und zum Detektieren der Netzwerkinformationentabelle;
einen Detektor (222), angeordnet zum Detektieren von Informationen über ein Land, zu dem jedes der Rundfunksignale gehört, unter Verwendung einer Netzwerkidentifikation (ID) der detektierten Netzwerkinformationentabelle; und
eine Erzeugungseinheit (223) zum Klassifizieren jedes der von dem Empfänger empfangenen Rundfunksignale gemäß einem Land, zu dem jedes der Rundfunksignale gehört, unter Verwendung der detektierten Landesinformationen und zum Erzeugen der Kanalliste.

6. Gerät nach einem der vorstehenden Ansprüche, ferner umfassend eine Speichereinheit zum Speichern von Rundfunksignal-Kanalinformationen für jede der Vielzahl von Regionen,
wobei der Kanallistenerzeuger angeordnet ist zum Lesen der in der Speichereinheit gespeicherten Rundfunksignal-Kanalinformationen und zum Erzeugen der Rundfunkkanalliste unter Verwendung der gelesenen Informationen.

7. Gerät nach einem der vorstehenden Ansprüche, ferner umfassend einen Tuner (370), abgeordnet zum Abstimmen auf einen ausgewählten Kanal, wenn ein einzelner Kanal aus der erzeugten Kanalliste durch die Eingabeeinheit ausgewählt wird.

8. Rundfunkempfangsverfahren eines Rundfunkempfangsgeräts, das Verfahren umfassend:
Empfangen von Rundfunksignalen einer Vielzahl von Regionen;
Erzeugen einer Rundfunkkanalliste für jede der Vielzahl von Regionen unter Verwendung von Informationen, die in jedem der Rundfunksignale enthalten sind;
Empfangen eines Auswahlsignals zum Auswählen von Regionen aus der Vielzahl von Regionen;
Ausgeben der Rundfunksignale oder der Rundfunkkanalliste,
wobei erste Kanallisten, jede jeweils korrespondierend mit Rundfunksignalen aus jeder der ausgewählten Regionen, erzeugt werden; und
eine zweite Kanalliste, die mit allen Rundfunksignalen korrespondiert, erzeugt wird,
und wobei Mittel (520) zum Auswählen zwischen den ersten Kanallisten und der zweiten Kanalliste erzeugt werden.

9. Verfahren nach Anspruch 8, ferner umfassend, Landesinformationen unter Verwendung einer Landesinformationentabelle, die in jedem der Rundfunksignale enthalten ist, zu detektieren, und wobei die Rundfunkkanalliste für jede der Vielzahl von Regionen gemäß den detektierten Landesinformationen erzeugt wird.

10. Verfahren nach Anspruch 9, wobei die Landesinformationentabelle eine Netzwerkinformationentabelle ist.

11. Verfahren nach Anspruch 8, ferner umfassend, Regionsinformationen unter Verwendung einer Regionsinformationentabelle, die in jedem der Rundfunksignale enthalten ist, zu detektieren, und wobei die Rundfunkkanalliste für jede der Vielzahl von Regionen gemäß den detektierten Regionsinformationen erzeugt wird.

12. Verfahren nach Anspruch 10, wobei der Erzeugungsschritt umfasst:
Demultiplexen jedes der Rundfunksignale und Detektieren der Netzwerkinformationentabelle;
Detektieren von Informationen über ein Land, zu dem jedes der Rundfunksignale gehört, unter Verwendung einer Netzwerkidentifikation (ID) der detektierten Netzwerkinformationentabelle; und
Klassifizieren jedes der empfangenen Rundfunksignale gemäß einem Land, zu dem jedes der Rundfunksignale gehört, unter Verwendung der detektierten Landesinformationen, um die Rundfunkkanalliste für jede der Vielzahl von Regionen zu erzeugen.

13. Verfahren nach einem der Ansprüche 8 bis 12, ferner umfassend:
Detektieren von Informationen über eine Region, die mit jedem der Rundfunksignale korrespondiert, unter Verwendung der Informationen, die in jedem der Rundfunksignale enthalten sind, und Speichern der detektierten Regionsinformationen und der Rundfunksignal-Kanalinformationen,
wobei das Erzeugen umfasst, die vorher gespeicherten Informationen zu lesen, um die Rundfunkkanalliste zu erzeugen.

14. Verfahren nach einem der Ansprüche 8 bis 13, ferner umfassend, auf einen ausgewählten Kanal abzustimmen, wenn ein einzelner Kanal aus der erzeugten Rundfunkkanalliste ausgewählt wird.

## Revendications

1. Appareil de réception d'émissions diffusées (100, 200, 300), comprenant :
un récepteur (110, 210, 310) agencé de façon à recevoir des signaux diffusés d'une pluralité de régions ;
un générateur de listes de canaux (120, 220, 320) pour générer une liste de canaux de diffusion pour chaque région de la pluralité de régions grâce à l'utilisation d'informations contenues dans les signaux diffusés ;
une unité d'entrée (360) pour recevoir un signal de sélection destiné à sélectionner des régions parmi la pluralité de régions ;
et
une unité de sortie (130, 230, 330) agencée de façon à produire les signaux diffusés ou la liste des canaux de diffusion,
cas dans lequel le générateur de listes de canaux (120, 220, 320) est agencé de façon à générer :
des premières listes de canaux, chacune correspondant respectivement à des signaux diffusés émanant de chacune des régions sélectionnées ; et
une seconde liste de canaux correspondant à tous les signaux diffusés ;
et des moyens (520) permettant d'effectuer une sélection entre les premières listes de canaux et la seconde liste de canaux.

2. Appareil selon la revendication 1, le générateur de listes de canaux étant agencé de façon à détecter des informations de pays grâce à l'utilisation d'un tableau d'informations de pays contenu dans chacun des signaux diffusés, et à générer la liste des canaux de diffusion pour chaque région de la pluralité de régions en fonction des informations de pays ayant été détectées.

3. Appareil selon la revendication 2, le tableau d'informations de pays étant un tableau d'informations de réseau.

4. Appareil selon la revendication 1, le générateur de listes de canaux étant agencé de façon à détecter des informations de région grâce à l'utilisation d'un tableau d'informations de région contenu dans chacun des signaux diffusés, et à générer la liste des canaux de diffusion pour chaque région de la pluralité de régions en fonction des informations de région ayant été détectées.

5. Appareil selon la revendication 3, le générateur de listes de canaux comprenant :
un démultiplexeur (221) agencé de façon à démultiplexer chacun des signaux diffusés et à détecter le tableau d'informations de réseau ;
un détecteur (222) agencé de façon à détecter des informations au sujet d'un pays auquel appartient chacun des signaux diffusés, grâce à l'utilisation d'une identification (ID) de réseau du tableau d'informations de réseau ayant été détecté ; et
une unité de génération (223) pour classer chacun des signaux diffusés reçus par le récepteur, en fonction d'un pays auquel appartient chacun des signaux diffusés, grâce à l'utilisation des informations de pays ayant été détectées, et pour générer la liste de canaux.

6. Appareil selon l'une quelconque des revendications précédentes, comprenant en outre une unité de stockage pour stocker des informations de canal de signaux diffusés pour chaque région de la pluralité de régions,
cas dans lequel le générateur de listes de canaux est agencé de façon à lire les informations de canal de signaux diffusés lesquelles sont stockées dans l'unité de stockage et à générer la liste des canaux de diffusion grâce à l'utilisation des informations ayant été lues.

7. Appareil selon l'une quelconque des revendications précédentes, comprenant en outre un syntoniseur (370) agencé de façon à assurer la syntonisation à un canal sélectionné, si un canal individuel est sélectionné à partir de la liste de canaux ayant été générée par l'intermédiaire de l'unité d'entrée.

8. Procédé de réception d'émissions diffusées d'un appareil de réception d'émissions diffusées, le procédé comprenant les opérations consistant à :
recevoir des signaux diffusés d'une pluralité de régions ;
générer une liste de canaux de diffusion pour chaque région de la pluralité de régions grâce à l'utilisation d'informations contenues dans chacun des signaux diffusés ;
recevoir un signal de sélection destiné à sélectionner des régions parmi la pluralité de régions ;
produire les signaux diffusés ou la liste des canaux de diffusion,
cas dans lequel des premières listes de canaux, chacune correspondant respectivement à des signaux diffusés émanant de chacune des régions sélectionnées, sont générées ; et
une seconde liste de canaux, correspondant à tous les signaux diffusés, est générée,
et cas dans lequel des moyens (520), permettant d'effectuer une sélection entre les premières listes de canaux et la seconde liste de canaux, sont générés.

9. Procédé selon la revendication 8, comprenant en outre l'opération consistant à détecter des informations de pays grâce à l'utilisation d'un tableau d'informations de pays contenu dans chacun des signaux diffusés, et cas dans lequel la liste des canaux de diffusion pour chaque région de la pluralité de régions est générée en fonction des informations de pays ayant été détectées.

10. Procédé selon la revendication 9, le tableau d'informations de pays étant un tableau d'informations de réseau.

11. Procédé selon la revendication 8, comprenant en outre l'opération consistant à détecter des informations de région grâce à l'utilisation d'un tableau d'informations de région contenu dans chacun des signaux diffusés, et cas dans lequel la liste des canaux de diffusion est générée pour chaque région de la pluralité de régions en fonction des informations de région ayant été détectées.

12. Procédé selon la revendication 10, l'étape de génération comprenant les opérations consistant à :
démultiplexer chacun des signaux diffusés et détecter le tableau d'informations de réseau ;
détecter des informations au sujet d'un pays auquel appartient chacun des signaux diffusés, grâce à l'utilisation d'une identification (ID) de réseau du tableau d'informations de réseau ayant été détecté ; et
classer chacun des signaux diffusés reçus, en fonction du pays auquel appartiennent les signaux diffusés, grâce à l'utilisation des informations de pays ayant été détectées afin de générer la liste des canaux de diffusion pour chaque région de la pluralité de régions.

13. Procédé selon l'une quelconque des revendications 8 à 12, comprenant en outre les opérations consistant à :
détecter des informations au sujet d'une région correspondant à chacun des signaux diffusés grâce à l'utilisation des informations contenues dans chacun des signaux diffusés, et stocker les informations de région ayant été détectées et les informations de canal de signaux diffusés,
cas dans lequel l'opération de génération comprend la lecture des informations stockées précédemment afin de générer la liste des canaux de diffusion.

14. Procédé selon l'une quelconque des revendications 8 à 13, comprenant en outre la syntonisation à un canal sélectionné, si un canal individuel est sélectionné à partir de la liste des canaux de diffusion ayant été générée.
